# EUROPÄISCHE PATENTSCHRIFT

(11) **EP 3 146 795 B1**
(45) Veröffentlichungstag und Bekanntmachung des Hinweises auf die Patenterteilung: **12.02.2020**
(21) Anmeldenummer: 15705296.0
(22) Anmeldetag: 17.02.2015
(51) Int. Cl.: H04W 4/02, H04W 4/80, H04W 84/20, H04W 88/06

(54) **CLUSTERHEAD-VORRICHTUNG WELCHE ALS GATEWAY ZWICHEN VEHICULAR AD-HOC NETZWERK UND ZELLULAREM NETZWERK FUNGIERT**
CLUSTERHEAD DEVICE THAT FUNCTIONS AS A GATEWAY BETWEEN VEHICULAR AD-HOC NETWORK AND CELLULAR NETWORK
DISPOSITIF CHEF DE GROUPE QUI FAIT OFFICE DE PASSERELLE ENTRE UN RÉSEAU AD HOC DE VÉHICULES ET UN RÉSEAU CELLULAIRE

(30) Priorität: 20.05.2014 DE 102014209579
(43) Veröffentlichungstag der Anmeldung: 29.03.2017
(73) Patentinhaber: Bayerische Motoren Werke Aktiengesellschaft, 80809 München (DE)
(72) Erfinder: GOZALVEZ SERRANO, David, 80636 München (DE); KLEMP, Oliver, 81669 München (DE); CALABUIG SOLER, Daniel, E-46009 Valencia (ES); MONSERRAT DEL RIO, Jose Francisco, E-46008 Valencia (ES)
(86) Internationale Anmeldenummer: PCT/EP2015/053284
(87) Internationale Veröffentlichungsnummer: WO 2015/176831

(56) Entgegenhaltungen:
- WO-A1-01/45437
- US-A1- 2007 115 868
- Seyhan Ucar: "Multi-Hop Cluster and LTE Based Heterogeneous Architecture for VANET", , 12. September 2013 (2013-09-12), XP055189129, Gefunden im Internet: URL:http://wnl.ku.edu.tr/uploads/1/0/5/9/1 0590997/wnl_seyhanucar_msthesis.pdf [gefunden am 2015-05-13]
- ABDERRAHIM BENSLIMANE ET AL: "Dynamic Clustering-Based Adaptive Mobile Gateway Management in Integrated VANET - 3G Heterogeneous Wireless Networks", IEEE JOURNAL ON SELECTED AREAS IN COMMUNICATIONS, IEEE SERVICE CENTER, PISCATAWAY, US, Bd. 29, Nr. 3, 1. März 2011 (2011-03-01), Seiten 559-570, XP011348545, ISSN: 0733-8716, DOI: 10.1109/JSAC.2011.110306
- REMY G ET AL: "LTE4V2X: LTE for a Centralized VANET Organization", GLOBAL TELECOMMUNICATIONS CONFERENCE (GLOBECOM 2011), 2011 IEEE, IEEE, 5. Dezember 2011 (2011-12-05), Seiten 1-6, XP032119083, DOI: 10.1109/GLOCOM.2011.6133884 ISBN: 978-1-4244-9266-4
- SHOU-CHIH LO ET AL: "A Multi-Head Clustering Algorithm in Vehicular Ad Hoc Networks", INTERNATIONAL JOURNAL OF COMPUTER THEORY AND ENGINEERING, 1. Januar 2013 (2013-01-01), Seiten 242-247, XP055189154, ISSN: 1793-8201, DOI: 10.7763/IJCTE.2013.V5.686
- OLUTAYO BOYINBODE ET AL: "A Survey on Clustering Algorithms for Wireless Sensor Networks", NETWORK-BASED INFORMATION SYSTEMS (NBIS), 2010 13TH INTERNATIONAL CONFERENCE ON, IEEE, PISCATAWAY, NJ, USA, 14 September 2010 (2010-09-14), pages 358-364, XP031801875, ISBN: 978-1-4244-8053-1

## Beschreibung

Die vorliegende Erfindung betrifft ein Verfahren zum Versenden von Informationen zwischen zwei mobilen Kommunikationsnetzwerken, eine diesbezügliche Vorrichtung und ein diesbezügliches Kraftfahrzeug.

Mobile Ad-hoc Netzwerke (MANETs), insbesondere Vehicular Ad-hoc Netzwerke (VANETs) zeichnen sich insbesondere durch die Mobilität der Kommunikationsknoten und durch die Abwesenheit einer festen Infrastruktur aus. Dadurch werden sie zunehmend für den Einsatz in Kraftfahrzeugen interessant. Viele dieser Technologien stützen sich auf das IEEE 802.11 Protokoll für MANETs und auf das IEE 802.11p Protokoll für VANETs. Durch die hohe Verfügbarkeit einer Infrastruktur für zellulare Netzwerke sind jedoch auch zellular basierte Funknetzwerke, wie beispielsweise auf dem 3GPP LTE Protokoll basierende zellulare Netzwerke, für den Einsatz in Kraftfahrzeugen interessant.

Für den Einsatz hybrider Netzwerke für Kraftfahrzeuge wird bislang daher davon ausgegangen, dass lediglich Ad-hoc netzwerkfähige Kraftfahrzeuge mit anderen lediglich Ad-hoc netzwerkfähigen Kraftfahrzeugen kommunizieren können, und dass lediglich zellularnetzfähige Kraftfahrzeuge mit anderen lediglich zellularnetzfähigen Kraftfahrzeugen kommunizieren können.

Daher wäre es wünschenswert, eine Möglichkeit bereitzustellen, welche die Kommunikationsfähigkeit von Kraftfahrzeugen untereinander verbessern kann.
D1 (Seyhan Ucar: "Multi-Hop Cluster and LTE Based Heterogeneous Architecture for VANET", 2013) offenbart die Bildung stabiler Cluster durch die Bestimmung der Fahrzeuge mit ähnlichem Mobilitätsmuster, um eine robuste Kommunikation mit minimalem Overhead bei Anwesenheit hochmobiler Fahrzeuge zu gewährleisten. Dazu wird eine Clustering-Technik vorgeschlagen, die auf der Auswahl des Knotens mit der geringsten Mobilität durch mehrere Hops basiert. Darüber hinaus wird eine Integration von IEEE Wireless Access in Fahrzeugumgebungen (WAVE) und 3GPP Netzwerken (LTE) offenbart.
D2 (WO 01/45437 A1) offenbart ein Kommunikationssystem welches Stationen aufweist, die in Clustern von Teilnehmerstationen angeordnet sind, von denen jede mit den anderen Teilnehmerstationen kommuniziert. Eine Mitgliedsstation ist eine Kopfstation des Clusters, die mit Kopfstationen der anderen Cluster kommuniziert. Die Stationen werden konfiguriert, indem der Kommunikationszustand zwischen einer Station und einer oder mehreren Cluster-Kopfstationen bestimmt wird. Die Station wird mindestens einem Cluster zugeordnet, wenn ein vorgegebener Kommunikationszustand zwischen der Station und der Cluster-Kopfstation festgestellt wurde. Die Station ist so eingestellt, dass sie mit der einen oder den mehreren Cluster-Kopfstationen, die den vorgeschriebenen Kommunikationszustand mit der Station haben, in unabhängiger Kommunikation steht.
D3 (Olutayo Boyinbode et al: "A Survey on Clustering Algorithms for Wireless Sensor Networks", 2010) offenbart eine Unterstützung einer Skalierbarkeit, indem Knoten oft in disjunkte und meist nicht überlappende Cluster gruppiert werden. Ferner werden Clustering-Algorithmen verglichen, die auf Metriken wie Konvergenzrate, Clusterstabilität, Clusterüberlappung, Standortwahrnehmung und Unterstützung der Knotenmobilität basieren.

Es ist Ziel der Erfindung eine Möglichkeit vorzuschlagen, welche zumindest einen Teil der im Stand der Technik bekannten Nachteile vermeidet oder zumindest vermindert.

Die Aufgabe wird erfindungsgemäß gelöst, mittels eines Verfahrens gemäß dem Hauptanspruch, sowie mittels einer Vorrichtung und einem Kraftfahrzeug gemäß zweier nebengeordneter Ansprüche.

Der Gegenstand des Hauptanspruches betrifft dabei ein Verfahren zum Versenden von Informationen zwischen zwei mobilen Kommunikationsnetzwerken, wobei vorzugsweise ein erstes mobiles Kommunikationsnetzwerk ein Mobile Ad-hoc Network ist, insbesondere ein Vehicular Ad-hoc Network, und wobei vorzugsweise ein zweites mobiles Kommunikationsnetzwerk ein Cellular Network ist, wobei das Verfahren aufweist: Bestimmen eines Entscheidungsintervalls; monitoren eines Signal-Kanales zum Empfangen eines Beacon-Signales; reduzieren einer Cluster-Head-Wahrscheinlichkeit für jedes empfangene Beacon-Signal in dem Entscheidungsintervall; entscheiden ein Cluster-Head zu sein, mit der Cluster-Head-Wahrscheinlichkeit. Falls die Entscheidung ein Cluster-Head zu sein positiv ist: Mitteilen der Entscheidung ein Cluster-Head zu sein, mittels Versenden einer Cluster-Head-Entscheidung-Gruppen-Nachricht über das erste mobile Kommunikationsnetzwerk; falls über das erste mobile Kommunikationsnetzwerk eine Gruppen-Nachricht empfangen wird, versenden dieser Gruppen-Nachricht über das zweite mobile Kommunikationsnetzwerk; und falls über das zweite mobile Kommunikationsnetzwerk eine Gruppen-Nachricht empfangenen wird, versenden dieser Gruppen-Nachricht über das erste mobile Kommunikationsnetzwerk.

Ein Versenden von Informationen zwischen zwei mobilen Kommunikationsnetzwerken im Sinne der Erfindung kann dabei meinen, dass Informationen versandt werden sollen, welche für zumindest einen Teil einer Gruppe der beiden mobilen Kommunikationsnetzwerke von Interesse sind. Solche Informationen können im Falle von Kraftfahrzeugen als Gruppenteilnehmer beispielsweise Verkehrsinformationen sein, welche die Gruppenteilnehmer betreffen können, jedoch auch Anfragen eines Gruppenteilnehmers an die restlichen Gruppenteilnehmer sein. Dabei können im Fall von Kraftfahrzeugen als Gruppenteilnehmer die am Straßenverkehr teilnehmenden individuellen Kraftfahrzeuge verstanden werden. Jedoch können solche Gruppen auch kleiner, begrenzter sein. Beispielsweise können auf einer Autobahn diejenigen Kraftfahrzeuge Gruppenteilnehmer sein, welche sich auf der entsprechenden Autobahn befinden, jedoch auch Kraftfahrzeuge, die planen sich auf die entsprechende Autobahn zu begeben, beispielsweise mittels einer entsprechenden Routenplanung in einem Navigationssystem des Kraftfahrzeuges. Auch können die Gruppenteilnehmer in einem solchen Fall auf ein näheres Umfeld, beispielsweise innerhalb eines entsprechenden Umkreises einer entsprechenden Autobahnbaustelle, begrenzt sein. Ferner kann es auch sinnvoll sein, einem außerhalb des hybriden Netzes befindlichem Server, Serversystem oder Server-Cloud eine solche Gruppennachricht zukommen zu lassen oder eine solche Gruppennachricht von solch einem Server, Serversystem oder Server-Cloud an die Gruppe beziehungsweise an einen entsprechenden Cluster-Head zu versenden.

Ein Mobile Ad-hoc Network im Sinne der Erfindung meint dabei ein sich selbst konfigurierendes, infrastrukturloses Netzwerk von Mobilfunkkommunikationsgeräten, welche sich drahtlos miteinander verbinden. Solch ein Mobile Ad-hoc Network wird auch als MANET bezeichnet. Jedes Mobilfunkkommunikationsgerät eines MANETs kann sich dabei frei bewegen, und kann von daher seine Verbindungen zu anderen in dem MANET befindlichen Mobilfunkkommunikationsgeräten häufig ändern. Ein bevorzugt genutztes Protokoll für MANETs ist dabei beispielsweise das IEEE 802.11.
Ein Vehicular Ad-hoc Network im Sinne der Erfindung kann dabei ein spezielles MANET sein. Solch ein Vehicular Ad-hoc Network wird auch als VANET bezeichnet. In VANETs werden vorzugsweise Kraftfahrzeuge als mobile Knoten verwendet, um ein MANET aufzubauen. In einem VANET ist jedes teilnehmende Kraftfahrzeug ein drahtloser Router oder ein Knoten des Netzes. Ein VANET erlaubt es den teilnehmenden Kraftfahrzeugen sich über eine maximale Distanz von etwa 100-300m miteinander zu verbinden, wodurch ein großes Weitbereichsnetzwerk entstehen kann. Gängige VANET Protokolle sind beispielsweise die auf dem IEEE 802.11p Standard basierenden Protokolle wie ETSI ITS-G5 oder IEEE 1609, IEEE 802.16 (WiMAX), Bluetooth, IRA und ZigBee.

Ein Cellular Network im Sinne der Erfindung kann dabei ein Mobilfunknetz sein. Solch ein zellulares Netzwerk erfordert eine auf Funkzellen basierte Infrastruktur. Beispiele für solche Mobilfunknetze sind das Global System for Mobile Communications Netz (GSM), das General Packet Radio Service Netz (GPRS), das Universal Mobile Telecommunications System Netz (UMTS) und das Long Term Evolution Netz (LTE).

Dabei können ein MANET/VANET und ein Cellular Network gemeinsam ein hybrides Netzwerk bilden, indem beispielsweise Kraftfahrzeuge miteinander Informationen, wie beispielsweise Informationen über vorausliegende Verkehrssituationen, austauschen können.

Ein Monitoren eines Signal-Kanales im Sinne der Erfindung kann dabei ein Überwachen eines solchen Kanales auf ein bestimmtes Ereignis sein.

Ein Beacon-Signal im Sinne der Erfindung kann dabei ein kleines, ständig beziehungsweise regelmäßig versandtes Datenpaket in einem drahtlosen Netzwerk sein. Solch ein Beacon-Signal kann beispielsweise regelmäßig alle 500ms versandt werden. Dabei kann solch ein Beacon Signal von den Teilnehmern des entsprechenden Netzes versandt werden.

Ein Cluster-Head im Sinne der Erfindung kann dabei ein Netzteilnehmer sein, der als Gateway beziehungsweise Router fungiert.

Eine Gruppen-Nachricht im Sinne der Erfindung kann dabei eine Nachricht meinen, welche sich an diejenigen Teilnehmer richtet, welche sich im selben MANET und/oder VANET befinden, wie der Versender der Gruppennachricht. Solch eine Gruppennachricht kann auch an einen Server außerhalb des MANETs und/oder VANETs versandt werden. Dort kann die Nachricht vorgehalten und/oder weiterverarbeitet werden, beispielsweise für Statistikzwecke, oder um beispielsweise die Nachricht über das Netz von dem aus die Nachricht versandt wurde, weiter zu verbreiten, beispielsweise an Teilnehmer eines zellularen Netzes innerhalb des selben hybriden Netzwerkes.

Eine Cluster-Head-Entscheidung-Gruppen-Nachricht im Sinne der Erfindung kann dabei eine Nachricht meinen, welche eine Information darüber enthält, dass der Versender der Nachricht ein Cluster-Head ist und somit dessen weitere Nachrichten empfangen und berücksichtigt werden sollen. Ferner kann damit auch eine Nachricht gemeint sein, die dem Empfänger mitteilt, dass der Versender der Nachricht - also der entsprechende Cluster-Head - einzelne für die Gruppe im Netz bestimmte Nachricht entgegen nimmt und weiter verteilt. Die Entscheidung ein Cluster-Head zu sein, kann dabei vorzugsweise bei oder nach Ablauf des Entscheidungsintervalls getroffen werden, vorzugsweise jedoch bei Ablauf des Entscheidungsintervalls.

Durch die erfindungsgemäße Lehre wird der Vorteil erreicht, dass Fahrzeuge, welche nicht alle sowohl Mobile Ad-hoc netzwerkfähig als auch Cellular netzwerkfähig sind, sich gemeinsam als Gruppe in einem hybriden Netz befinden können, also einem Netz welches sowohl Mobile Ad-hoc als auch Cellular aufgebaut ist, und miteinander kommunizieren können.

Ein weiterer Vorteil der erfindungsgemäßen Lehre ist, dass durch die Art der Entscheidung wer Cluster-Head ist und wer nicht, der organisatorische Aufwand beziehungsweise Rechenaufwand um diese Entscheidung optimiert dynamisch zu treffen, verringert werden kann, im Besten Fall minimiert werden kann. Somit kann dezentral und dynamisch entschieden werden, welcher hybrid Netz-fähige Teilnehmer als Gateway fungiert und wer nicht, um eine optimale Abdeckung der Gruppenteilnehmer in dem mobilen hybriden Netz zu gewährleisten und dabei zu berücksichtigen, dass nicht zu viele hybrid Netz-fähige Teilnehmer als Gateways fungieren und somit das mobile hybride Netz optimal mit Nachrichten versorgt werden kann ohne es unnötig mit redundanten Daten/Nachrichten zu belasten.

Ein weiterer Vorteil der erfindungsgemäße Lehre ist, dass bereits bei den einzelnen Teilnehmern des Netzes vorhandene Rechenleistung verwendet werden kann und somit auf die Rechenleistung eines außerhalb des entsprechenden MANETs/VANETs Servers, Servernetzes und/oder Cloud zumindest weitgehend, bevorzugt jedoch vollständig, verzichtet werden kann.

Der Gegenstand eines nebengeordneten Anspruches betrifft dabei eine Vorrichtung zum Versenden von Informationen zwischen zwei mobilen Kommunikationsnetzwerken wobei vorzugsweise ein erstes mobiles Kommunikationsnetzwerk ein Mobile Ad-hoc Network ist, insbesondere ein Vehicular Ad-hoc Network, und wobei vorzugsweise ein zweites mobiles Kommunikationsnetzwerk ein Cellular Network ist, die Vorrichtung aufweisend: Eine Mobile Ad-hoc Network-fähige Vorrichtung, insbesondere eine Vehicular Ad-hoc Network-fähige Vorrichtung, eine Cellular Network-fähige Vorrichtung und eine Cluster-Head-Vorrichtung. Dabei ist die Cluster-Head-Vorrichtung dazu eingerichtet, irgendein erfindungsgemäßes Verfahren auszuführen.

Durch die erfindungsgemäße Lehre wird der Vorteil erreicht, dass Hybrid-Netz Teilnehmer dazu eingerichtet werden können, sowohl Mobile Ad-hoc netzwerkfähig als auch Cellular netzwerkfähig zu sein, um als Cluster-Head fungieren zu können und es zu ermöglichen, sich gemeinsam mit nicht hybriden-Netzteilnehmern als Gruppe in einem Hybriden Netz befinden zu können, also einem Netz welches sowohl Mobile Ad-hoc als auch Cellular aufgebaut ist, um miteinander kommunizieren zu können.

Ein weiterer erfindungsgemäßer Vorteil ist der, dass die Kommunikation zwischen Ad-hoc fähigen Gruppenteilnehmern, insbesondere Ad-hoc fähigen Kraftfahrzeugen und der Netzinfrastruktur beziehungsweise einem Backend ermöglicht werden kann, wodurch wiederum die Kommunikation zwischen lediglich Ad-hoc fähigen Gruppenteilnehmern und lediglich Cellular-Netz fähigen Gruppenteilnehmern ermöglicht beziehungsweise verbessert werden kann.

Der Gegenstand eines weiteren nebengeordneten Anspruches betrifft dabei ein Kraftfahrzeug, aufweisend eine Vorrichtung gemäß einer erfindungsgemäßen Vorrichtung zum Versenden von Informationen zwischen zwei mobilen Kommunikationsnetzwerken.

Durch die erfindungsgemäße Lehre wird der Vorteil erreicht, dass Hybrid-Netz Teilnehmer-Kraftfahrzeuge, dazu eingerichtet werden können, sowohl Mobile Ad-hoc netzwerkfähig als auch Cellular netzwerkfähig zu sein, um als Cluster-Head fungieren zu können und es zu ermöglichen, sich gemeinsam mit nicht hybriden-Netzteilnehmern als Gruppe in einem Hybriden Netz befinden zu können, also einem Netz welches sowohl Mobile Ad-hoc als auch Cellular aufgebaut ist, um miteinander kommunizieren können.

Bevor nachfolgend Ausgestaltungen der Erfindung eingehender beschrieben werden, ist zunächst festzuhalten, dass die Erfindung nicht auf die beschriebenen Komponenten oder die beschriebenen Verfahrensschritte beschränkt ist. Weiterhin stellt auch die verwendete Terminologie keine Einschränkung dar, sondern hat lediglich beispielhaften Charakter. Soweit in der Beschreibung und den Ansprüchen der Singular verwendet wird ist dabei jeweils der Plural mitumfasst, soweit der Kontext dies nicht explizit ausschließt.

Nachfolgend werden weitere exemplarische Ausgestaltungen des erfindungsgemäßen Verfahrens erläutert.

Entsprechend einer ersten exemplarischen Ausgestaltung weist das Verfahren ferner auf, dass falls die Entscheidung ein Cluster-Head zu sein positiv ist: Mitteilen der Entscheidung ein Cluster-Head zu sein, mittels Versenden einer Cluster-Head-Entscheidung-Gruppen-Nachricht über das zweite mobile Kommunikationsnetzwerk.

Diese Ausgestaltung weist den Vorteil auf, dass auch den nicht-hybriden Gruppenteilnehmern in dem entsprechenden hybriden Netz, welche lediglich mit dem zweiten mobilen Kommunikationsnetzwerk an das hybride Netz angeschlossen sind, mitgeteilt werden kann, wer ein Cluster-Head ist und dass mit diesem kommuniziert werden kann, um Nachrichten an und von der Gruppe auszutauschen.

Entsprechend einer weiteren exemplarischen Ausgestaltung weist das Verfahren ferner auf: Initialisieren der Cluster-Head-Wahrscheinlichkeit auf den Wert eins, falls noch kein Cluster-Head-Wahrscheinlichkeitswert vorhanden ist oder eine Cluster-Head-Wahrscheinlichkeit Initialisierungsanweisung vorliegt.

Diese Ausgestaltung weist den Vorteil auf, dass der Wert für die Cluster-Head-Wahrscheinlichkeit dynamisch gehalten werden kann, um beispielsweise für den Fall, dass ein Teilnehmer eine Gruppe verlässt und sich in eine neue Gruppe begibt, sein Cluster-Head-Wahrscheinlichkeitswert zurück gesetzt werden kann, um eine optimalere Ausgangsbasis für den neuen Entscheidungsprozess ein Cluster-Head zu sein oder nicht zu sein, zu ermöglichen.

Entsprechend einer weiteren exemplarischen Ausgestaltung weist das Verfahren ferner auf, dass das Entscheidungsintervall zwischen 1 Sekunde und 60 Sekunden liegt. Das Entscheidungsintervall kann jedoch beispielsweise in Abhängigkeit einer Situation des entsprechenden Gruppenteilnehmers auch kürzer oder länger sein, beispielsweise zwischen 1 Sekunde und 30 Sekunden.

Diese Ausgestaltung weist den Vorteil auf, dass das Entscheidungsintervall dynamisch anpassbar ist, um situativ eine optimalere Entscheidung treffen zu können, ob ein Gruppenteilnehmer Cluster-Head wird.

Entsprechend einer weiteren exemplarischen Ausgestaltung weist das Verfahren ferner auf, dass das Entscheidungsintervall zufällig bestimmbar ist.

Diese Ausgestaltung weist den Vorteil auf, dass das Entscheidungsintervall und damit die Entscheidung eines Gruppenteilnehmers Cluster-Head zu sein weiter dynamisiert werden kann.

Entsprechend einer weiteren exemplarischen Ausgestaltung weist das Verfahren ferner auf, dass das Entscheidungsintervall in Abhängigkeit einer Bewegungsgeschwindigkeit bestimmbar ist.

Diese Ausgestaltung weist den Vorteil auf, dass abhängig einer für ein Kraftfahrzeug typischen Situation einer häufigen Geschwindigkeitsänderung eine Anpassung der Entscheidung ein Cluster-Head zu sein ermöglicht werden kann.

Entsprechend einer weiteren exemplarischen Ausgestaltung weist das Verfahren ferner auf, dass das Reduzieren der Cluster-Head-Wahrscheinlichkeit für jedes empfangene Beacon-Signal in dem Entscheidungsintervall um einen Wert erfolgt, der zwischen Null und Eins liegt. Vorzugsweise ist der Wert jedoch größer als Null. Besonders bevorzugt ist der Wert größer als Null und kleiner oder gleich 0,5, insbesondere kleiner oder gleich 0,25.

Diese Ausgestaltung weist den Vorteil auf, dass die Entscheidung des entsprechenden Gruppenteilnehmers ein Cluster-Head zu sein weiter dynamisiert werden kann, in Abhängigkeit von den Cluster-Heads in seiner Umgebung.

Entsprechend einer weiteren exemplarischen Ausgestaltung weist das Verfahren ferner auf, dass das Reduzieren der Cluster-Head-Wahrscheinlichkeit für jedes empfangene Beacon-Signal in dem Entscheidungsintervall um einen Wert erfolgt, der mittels einer Gewichtung, vorzugweise mittels eines Gewichtungsalgorithmus bestimmt wird.

Eine Gewichtung im Sinne der Erfindung kann dabei einen Vorgang meinen, welcher die Reduzierung der Cluster-Head-Wahrscheinlichkeit des entsprechenden Teilnehmers vornimmt, in Abhängigkeit entsprechender Parameter, welche für das dynamische Verhalten der Gruppenteilnehmer im mobilen hybriden Netz signifikant sein können.

Ein Gewichtungsalgorithmus im Sinne der Erfindung kann dabei einen Vorgang meinen, welcher die Reduzierung der Cluster-Head-Wahrscheinlichkeit des entsprechenden Teilnehmers dynamisch vornimmt, in Abhängigkeit entsprechender Parameter, welche für das dynamische Verhalten der Gruppenteilnehmer im mobilen hybriden Netz signifikant sein können.

Diese Ausgestaltung weist den Vorteil auf, dass die Entscheidung des entsprechenden Gruppenteilnehmers ein Cluster-Head zu sein noch weiter dynamisiert und situativ angepasst werden kann.

Entsprechend einer weiteren exemplarischen Ausgestaltung weist das Verfahren ferner auf, dass das Entscheiden ein Cluster-Head zu sein, mit der Cluster-Head-Wahrscheinlichkeit, in Abhängigkeit eines Schwellwertes für die Cluster-Head-Wahrscheinlichkeit, erfolgt.

Ein Schwellwert im Sinne der Erfindung kann dabei einen Wert meinen, mit dem, falls die Cluster-Head-Wahrscheinlichkeit diesen unterschreitet, beispielsweise stets entschieden wird, dass der entsprechende Gruppenteilnehmer kein Cluster-Head wird oder mehr ist.

Diese Ausgestaltung weist den Vorteil auf, dass eine einfache Entscheidungsmöglichkeit für potentielle Cluster-Head Teilnehmer geschaffen wird, zu entscheiden wann sie als Cluster-Head fungieren und wann nicht.

Entsprechend einer weiteren exemplarischen Ausgestaltung weist das Verfahren ferner auf, dass das Mitteilen der Entscheidung ein Cluster-Head zu sein, mittels Versenden einer Cluster-Head-Entscheidung-Gruppen-Nachricht, in einem Beacon-Signal erfolgt.

Diese Ausgestaltung weist den Vorteil auf, dass das Mitteilen der Entscheidung ein Cluster-Head zu sein, mittels einer bereits bestehenden Benachrichtigungsstruktur erfolgen kann.

Entsprechend einer weiteren exemplarischen Ausgestaltung weist das Verfahren ferner auf, dass das Versenden und/oder das Empfangen der Gruppen-Nachricht als Broadcast-Nachricht und/oder als Unicast-Nachricht erfolgt.

Diese Ausgestaltung weist den Vorteil auf, dass das Versenden und/oder Empfangen von Gruppen-Nachrichten, mittels einer bereits bestehenden Benachrichtigungsstruktur erfolgen kann.

Die Erfindung erlaubt es somit, zu ermöglichen, dass in einem mobilen hybriden Netz Teilnehmer welche nicht hybrid Netz-fähig sind, somit nur eines der beiden Netze unterstützen, mit Teilnehmern des selben hybriden Netzes, welche das andere der beiden Netze unterstützen kommunizieren können, indem Teilnehmer welche hybrid Netz-fähig sind, als Gateway von einem in das andere Netz fungieren können und dabei selbständig darauf achten, dort Gateway zu sein, wo dies notwendig erscheint und dort wo dies nicht notwendig erscheint, kein Gateway, sondern gewöhnliche Gruppenteilnehmer im mobilen hybriden Netz zu sein.

Die Erfindung wird nachfolgend eingehender an Hand der Figuren erläutert werden. In diesen zeigen:
Fig. 1 ein schematisches Ablaufdiagramm eines vorgeschlagenen Verfahrens gemäß einer beispielhaften Ausgestaltung der Erfindung;
Fig. 2 ein schematisches Ablaufdiagramm eines vorgeschlagenen Verfahrens gemäß einer weiteren beispielhaften Ausgestaltung der Erfindung;
Fig. 3 eine schematische Darstellung einer vorgeschlagenen Vorrichtung gemäß einer beispielhaften Ausgestaltung der Erfindung; und
Fig. 4 eine schematisch Darstellung einer Cluster-Head Verteilung innerhalb einer Gruppe eines mobilen hybriden Netzes.

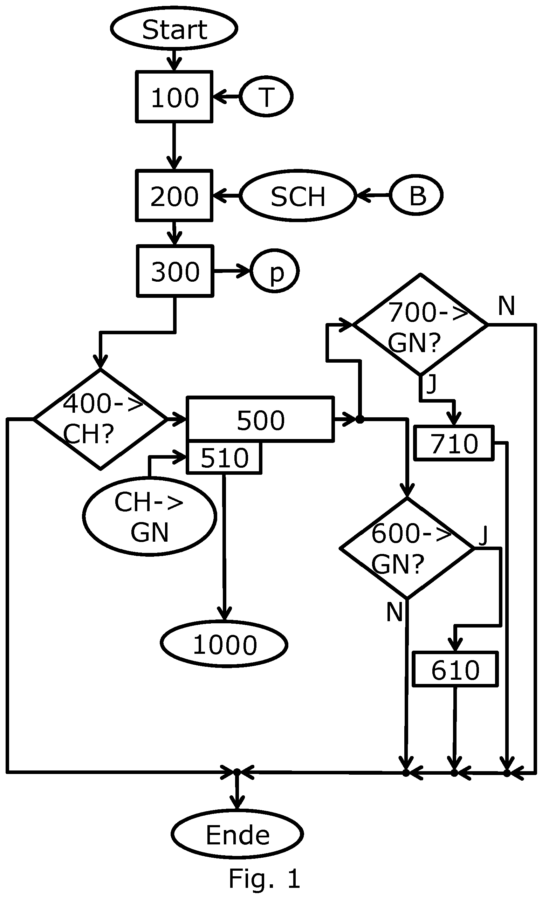

Fig. 1 zeigt ein schematisches Ablaufdiagramm eines vorgeschlagenen Verfahrens gemäß einer beispielhaften Ausgestaltung der Erfindung.

Dabei zeigt Fig. 1 ein Ablaufdiagramm eines Verfahrens zum Versenden von Informationen zwischen zwei mobilen Kommunikationsnetzwerken 1000, 2000, wobei vorzugsweise ein erstes mobiles Kommunikationsnetzwerk 1000 ein Mobile Ad-hoc Network MANET ist, insbesondere ein Vehicular Ad-hoc Network VANET, und wobei vorzugsweise ein zweites mobiles Kommunikationsnetzwerk 2000 ein Cellular Network CNET ist, das Verfahren aufweisend: Bestimmen 100 eines Entscheidungsintervalls T. Monitoren 200 eines Signal-Kanales SCH zum Empfangen eines Beacon-Signales B. Reduzieren 300 einer Cluster-Head-Wahrscheinlichkeit p für jedes empfangene Beacon-Signal B in dem Entscheidungsintervall T. Entscheiden 400 ein Cluster-Head CH zu sein, mit der Cluster-Head-Wahrscheinlichkeit p. Falls die Entscheidung 400 ein Cluster-Head CH zu sein positiv ist: Mitteilen 500 der Entscheidung 400 ein Cluster-Head CH zu sein, mittels versenden 510 einer Cluster-Head-Entscheidung-Gruppen-Nachricht CH-GN über das erste mobile Kommunikationsnetzwerk 1000. Falls 600 über das erste mobile Kommunikationsnetzwerk 1000 eine Gruppen-Nachricht GN empfangenen wird, versenden 610 dieser Gruppen-Nachricht GN über das zweite mobile Kommunikationsnetzwerk 2000, und falls 700 über das zweite mobile Kommunikationsnetzwerk 2000 eine Gruppen-Nachricht GN empfangenen wird, versenden 710 dieser Gruppen-Nachricht GN über das erste mobile Kommunikationsnetzwerk 1000.

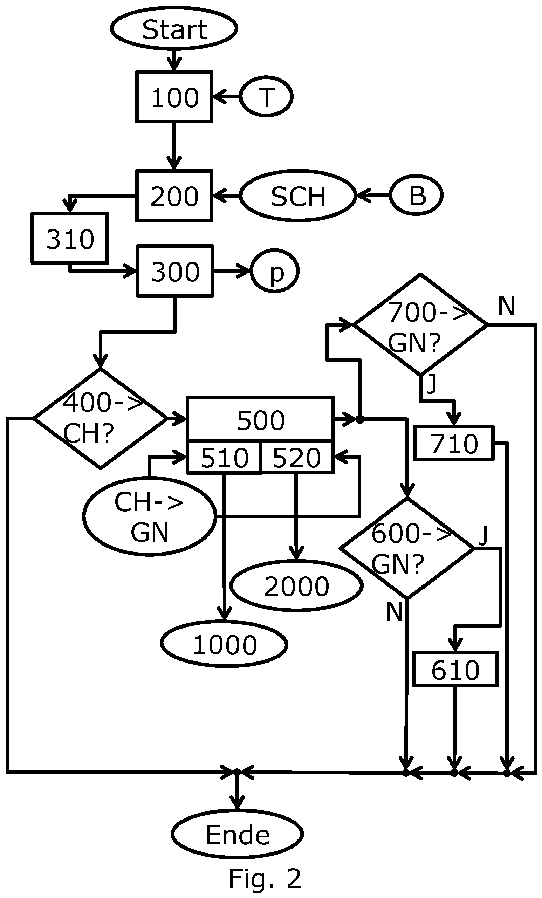

Fig. 2 zeigt ein schematisches Ablaufdiagramm eines vorgeschlagenen Verfahrens gemäß einer weiteren beispielhaften Ausgestaltung der Erfindung.

Dabei zeigt Fig. 2 ein Ablaufdiagramm eines gegenüber dem Verfahren aus Fig.1 erweiterten Verfahrens. Das zuvor zu Fig. 1 Gesagte gilt entsprechend für Fig. 2 fort.

Wie Fig. 2 entnommen werden kann, weist das Verfahren darüber hinaus auf, dass falls die Entscheidung 400 ein Cluster-Head CH zu sein positiv ist: Mitteilen 500 der Entscheidung 400 ein Cluster-Head CH zu sein, mittels Versenden 520 einer Cluster-Head-Entscheidung-Gruppen-Nachricht CH-GN über das zweite mobile Kommunikationsnetzwerk 2000. Ferner weist das in Fig. 2 gezeigte Verfahren auf: Initialisieren 310 der Cluster-Head-Wahrscheinlichkeit p auf den Wert eins, falls noch kein Cluster-Head-Wahrscheinlichkeitswert p vorhanden ist oder eine Cluster-Head-Wahrscheinlichkeit p Initialisierungsanweisung vorliegt.

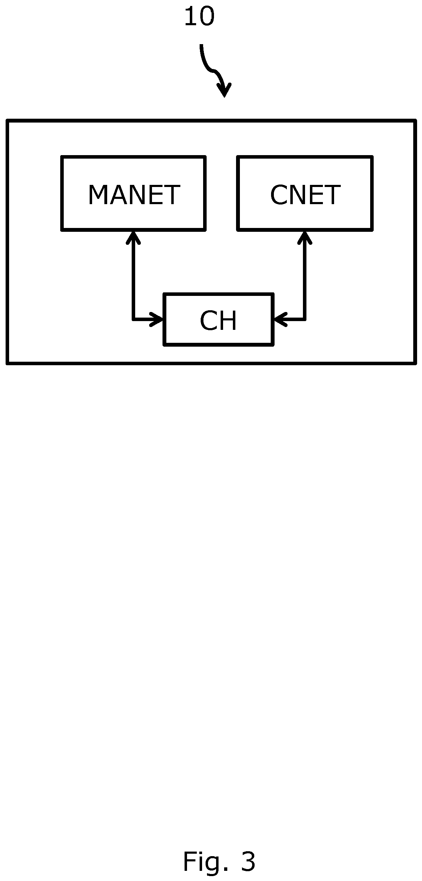

Fig. 3 zeigt eine schematische Darstellung einer vorgeschlagenen Vorrichtung gemäß einer beispielhaften Ausgestaltung der Erfindung.

Dabei zeigt Fig. 3 eine Vorrichtung 10 zum Versenden von Informationen zwischen zwei mobilen Kommunikationsnetzwerken 1000, 2000 wobei vorzugsweise ein erstes mobiles Kommunikationsnetzwerk 1000 ein Mobile Ad-hoc Network MANET ist, insbesondere ein Vehicular Ad-hoc Network VANET, und wobei vorzugsweise ein zweites mobiles Kommunikationsnetzwerk 2000 ein Cellular Network CNET ist, die Vorrichtung 10 aufweisend: Eine Mobile Ad-hoc Network-fähige Vorrichtung MANET, insbesondere eine Vehicular Ad-hoc Network-fähige Vorrichtung VANET, eine Cellular Network-fähige Vorrichtung CNET und eine Cluster-Head-Vorrichtung CH. Dabei ist die Cluster-Head-Vorrichtung CH dazu eingerichtet, irgendein erfindungsgemäßes Verfahren auszuführen.

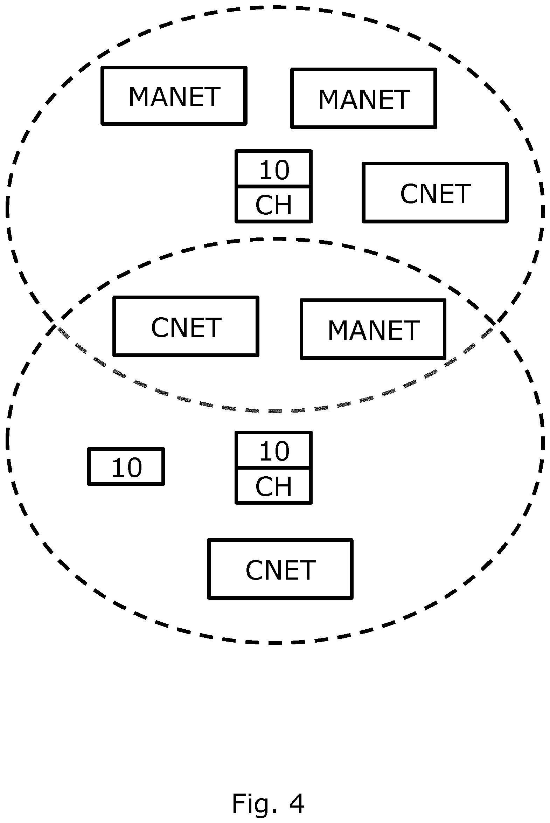

Fig. 4 zeigt eine schematisch Darstellung einer Cluster-Head Verteilung innerhalb einer Gruppe eines mobilen hybriden Netzes.

Dabei zeigt Fig. 4 eine Gruppe von teilnehmenden Kraftfahrzeugen innerhalb eines mobilen hybriden Netzes. Dabei sind einige Kraftfahrzeuge MANET lediglich Ad-hoc fähig und andere Kraftfahrzeuge CNET sind lediglich Celluar Network fähig. Dahingegen sind einige weitere Kraftfahrzeuge 10 hybrid Netz-fähig, unterstützen somit sowohl das MANET als auch das CNET. Um alle Gruppenteilnehmer zu erreichen ist es in dem illustrierten Beispiel der Fig. 4 jedoch nicht nötig, dass alles hybrid Netz-fähigen Kraftfahrzeuge 10 als Gateway CH fungieren. Lediglich zwei dieser hybrid Netz-fähigen Kraftfahrzeuge 10 fungieren dabei auch als Gateway CH beziehungsweise Cluster-Head CH und decken somit mit ihrer jeweiligen Reichweite (durch die beiden Kreise illustriert) alle Teilnehmer der Gruppe ab.

Die Erfindungsidee kann wie folgt zusammengefasst werden. Es wird ein Verfahren und zwei diesbezügliche Vorrichtungen bereitgestellt, wodurch es möglich werden kann, dass in einem mobilen hybriden Netz Teilnehmer welche nicht hybrid Netz-fähig sind, somit nur eines der beiden Netze unterstützen, mit Teilnehmern des selben hybriden Netzes, welche das andere der beiden Netze unterstützen kommunizieren können, indem Teilnehmer welche hybrid Netz-fähig sind, als Gateway von einem in das andere Netz fungieren können und dabei selbständig darauf achten, dort Gateway zu sein, wo dies notwendig erscheint und dort wo dies nicht notwendig erscheint, kein Gateway, sondern gewöhnliche Gruppenteilnehmer im mobilen hybriden Netz zu sein. Dadurch kann dezentral und dynamisch entschieden werden, welcher hybrid Netz-fähige Teilnehmer als Gateway fungiert und wer nicht, um eine optimale Abdeckung der Gruppenteilnehmer in dem mobilen hybriden Netz zu gewährleisten und dabei zu berücksichtigen, dass nicht zu viele hybrid Netz-fähige Teilnehmer als Gateways fungieren und somit das mobile hybride Netz optimal mit Nachrichten versorgt wird ohne es unnötig mit redundanten Daten/Nachrichten zu belasten.

### Bezugszeichenliste

- 100: Bestimmen eines Entscheidungsintervalls
- 200: Monitoren eines Signal-Kanales
- 300: Reduzieren einer Cluster-Head-Wahrscheinlichkeit
- 310: Initialisieren der Cluster-Head-Wahrscheinlichkeit
- 400: Entscheiden ein Cluster-Head zu sein
- 500: Mitteilen der Entscheidung ein Cluster-Head zu sein
- 510: Versenden einer Cluster-Head-Entscheidung-Gruppen-Nachricht über das erste mobile Kommunikationsnetzwerk
- 520: Versenden einer Cluster-Head-Entscheidung-Gruppen-Nachricht über das zweite mobile Kommunikationsnetzwerk
- 600: Wird über das erste mobile Kommunikationsnetzwerk eine Gruppen-Nachricht empfangenen?
- 610: Versenden einer Gruppen-Nachricht über das zweite mobile Kommunikationsnetzwerk
- 700: Wird über das zweite mobile Kommunikationsnetzwerk eine Gruppen-Nachricht empfangen?
- 710: Versenden einer Gruppen-Nachricht über das erste mobile Kommunikationsnetzwerk
- 1000: erstes mobiles Kommunikationsnetzwerk
- 2000: zweites mobiles Kommunikationsnetzwerk
- B: Beacon-Signal
- CH: Cluster-Head
- CH-GN: Cluster-Head-Entscheidung-Gruppen-Nachricht
- CNET: Cellular Network
- GN: Gruppen-Nachricht
- MANET: Mobile Ad-hoc Network
- p: Cluster-Head-Wahrscheinlichkeit
- SCH: Signal-Kanal
- T: Entscheidungsintervall
- VANET: Vehicular Ad-hoc Network

## Patentansprüche

1. Ein Verfahren zum Versenden von Informationen zwischen zwei mobilen Kommunikationsnetzwerken (1000, 2000), wobei das erste mobile Kommunikationsnetzwerk (1000) ein Mobile Ad-hoc Network (MANET) ist, insbesondere ein Vehicular Ad-hoc Network (VANET), wobei das zweite mobile Kommunikationsnetzwerk (2000) ein Cellular Network (CNET) ist, und wobei die beiden mobilen Kommunikationsnetzwerke (1000, 2000) gemeinsam ein hybrides Netzwerk mit einem Signal-Kanal (SCH) bilden, wobei ein hybrid-netzfähiger Knoten als Gateway von einem in das andere Netz fungieren kann in dem er ein Verfahren ausführt, um ein Cluster-Head zu werden, wobei das Verfahren folgende Schritte aufweist:
- Bestimmen (100) eines Entscheidungsintervalls (T),
- Monitoren (200) des Signal-Kanales (SCH) zum Empfangen eines Beacon-Signales (B),
- Reduzieren (300) einer Cluster-Head-Wahrscheinlichkeit (p) für jedes empfangene Beacon-Signal (B) in dem Entscheidungsintervall (T),
- Entscheiden (400) ein Cluster-Head (CH) zu sein, mit der reduzierten Cluster-Head-Wahrscheinlichkeit (p) mit Ablauf des Entscheidungsintervalls,
- Falls die Entscheidung (400) ein Cluster-Head (CH) zu sein positiv ist:
- Mitteilen (500) der Entscheidung (400) ein Cluster-Head (CH) zu sein, mittels versenden (510) einer Cluster-Head-Entscheidung-Gruppen-Nachricht (CH-GN) über das erste mobile Kommunikationsnetzwerk (1000),
- falls (600) über das erste mobile Kommunikationsnetzwerk (1000) eine Gruppen-Nachricht (GN) empfangen wird, versenden (610) dieser Gruppen-Nachricht (GN) über das zweite mobile Kommunikationsnetzwerk (2000), und
- falls (700) über das zweite mobile Kommunikationsnetzwerk (2000) eine Gruppen-Nachricht (GN) empfangenen wird, versenden (710) dieser Gruppen-Nachricht (GN) über das erste mobile Kommunikationsnetzwerk (1000).

2. Das Verfahren gemäß Anspruch 1, wobei das Verfahren darüber hinaus aufweist:
- Falls die Entscheidung (400) ein Cluster-Head (CH) zu sein positiv ist:
- Mitteilen (500) der Entscheidung (400) ein Cluster-Head (CH) zu sein, mittels Versenden (520) einer Cluster-Head-Entscheidung-Gruppen-Nachricht (CH-GN) über das zweite mobile Kommunikationsnetzwerk (2000).

3. Das Verfahren gemäß Anspruch 1 oder 2, wobei das Verfahren darüber hinaus aufweist:
- Initialisieren (310) der Cluster-Head-Wahrscheinlichkeit (p) auf den Wert eins, falls:
- noch kein Cluster-Head-Wahrscheinlichkeitswert (p) vorhanden ist, oder
- eine Cluster-Head-Wahrscheinlichkeit (p) Initialisierungsanweisung vorliegt.

4. Das Verfahren gemäß Anspruch irgendeinem der vorhergehenden Ansprüche, wobei
das Entscheidungsintervall (T) zwischen 1 Sekunde und 60 Sekunden liegt.

5. Das Verfahren gemäß irgend einem der vorhergehenden Ansprüche, wobei
das Entscheidungsintervall (T) zufällig bestimmbar ist.

6. Das Verfahren gemäß irgend einem der vorhergehenden Ansprüche, wobei
das Entscheidungsintervall (T) in Abhängigkeit einer Bewegungsgeschwindigkeit eines Kraftfahrzeuges beziehungsweise einer Vorrichtung des Kraftfahrzeuges, welches das Verfahren ausführt, bestimmbar ist.

7. Das Verfahren gemäß irgend einem der vorhergehenden Ansprüche, wobei
das Reduzieren (300) der Cluster-Head-Wahrscheinlichkeit (p) für jedes empfangene Beacon-Signal (B) in dem Entscheidungsintervall (T) um einen Wert erfolgt, der zwischen 0 und 1 liegt.

8. Das Verfahren gemäß irgend einem der vorhergehenden Ansprüche, wobei
das Reduzieren (300) der Cluster-Head-Wahrscheinlichkeit (p) für jedes empfangene Beacon-Signal (B) in dem Entscheidungsintervall (T) um einen Wert erfolgt, der mittels einer Gewichtung, vorzugweise mittels eines Gewichtungsalgorithmus bestimmt wird, und wobei die Gewichtung in Abhängigkeit mindestens eines entsprechenden Parameters, welcher für ein dynamisches Verhalten von Gruppenteilnehmern im hybriden Netzwerk signifikant ist, erfolgt.

9. Das Verfahren gemäß irgend einem der vorhergehenden Ansprüche, wobei
das Entscheiden (400) ein Cluster-Head (CH) zu sein, mit der Cluster-Head-Wahrscheinlichkeit (p), in Abhängigkeit eines Schwellwertes (S) für die Cluster-Head-Wahrscheinlichkeit (p), erfolgt.

10. Das Verfahren gemäß irgend einem der vorhergehenden Ansprüche, wobei
das Mitteilen (500) der Entscheidung ein Cluster-Head (CH) zu sein, mittels Versenden (510) einer Cluster-Head-Entscheidung-Gruppen-Nachricht (CH-GN), in einem Beacon-Signal (B) erfolgt.

11. Das Verfahren gemäß irgend einem der vorhergehenden Ansprüche, wobei
das Versenden (610) und/oder das Empfangen der Gruppen-Nachricht (GN) als Broadcast-Nachricht und/oder als Unicast-Nachricht erfolgt.

12. Eine Vorrichtung (10) zum Versenden von Informationen zwischen zwei mobilen Kommunikationsnetzwerken (1000, 2000) wobei das erste mobile Kommunikationsnetzwerk (1000) ein Mobile Ad-hoc Network (MANET) ist, insbesondere ein Vehicular Ad-hoc Network (VANET), und wobei das zweite mobile Kommunikationsnetzwerk (2000) ein Cellular Network (CNET) ist, die Vorrichtung (10) aufweisend:
- eine Mobile Ad-hoc Network-fähige Vorrichtung (MANET), insbesondere eine Vehicular Ad-hoc Network-fähige Vorrichtung (VANET),
- eine Cellular Network-fähige Vorrichtung (CNET), und
- eine Cluster-Head-Vorrichtung (CH),
wobei die Cluster-Head-Vorrichtung (CH) dazu eingerichtet ist, ein Verfahren gemäß irgendeinem der Ansprüche 1 bis 11 auszuführen.

13. Ein Kraftfahrzeug, aufweisend:
- eine Vorrichtung (10) gemäß Anspruch 12.

14. Ein Computerprogrammprodukt, umfassend Befehle, die bewirken, dass die Vorrichtung gemäß Anspruch 12, die Verfahrensschritte nach einem der Ansprüche 1 bis 11 ausführt.

15. Ein Datenträger aufweisend ein Computerprogrammprodukt gemäß Anspruch 14.

## Claims

1. A method for sending information between two mobile communication networks (1000, 2000), wherein the first mobile communication network (1000) is a mobile ad-hoc network (MANET), in particular a vehicular ad-hoc network (VANET), wherein the second mobile communication network (2000) is a cellular network (CNET), and wherein the two mobile communication networks (1000, 2000) together form a hybrid network with a signal channel (SCH), wherein a hybrid-network-enabled node can function as a gateway from one network to the other network in that it carries out a method in order to become a cluster head, the method comprising the following steps:
- determining (100) a decision interval (T),
- monitoring (200) the signal channel (SCH) in order to receive a beacon signal (B),
- reducing (300) a cluster head probability (p) for each received beacon signal (B) in the decision interval (T),
- deciding (400) to be a cluster head (CH), with the reduced cluster head probability (p) on expiry of the decision interval,
- if the decision (400) to be a cluster head (CH) is positive:
- communicating (500) the decision (400) to be a cluster head (CH) by sending (510) a cluster head decision group message (CH-GN) via the first mobile communication network (1000),
- if (600) a group message (GN) is received via the first mobile communication network (1000), sending (610) this group message (GN) via the second mobile communication network (2000), and
- if (700) a group message (GN) is received via the second mobile communication network (2000), sending (710) this group message (GN) via the first mobile communication network (1000) .

2. The method according to claim 1, wherein the method additionally comprises:
- if the decision (400) to be a cluster head (CH) is positive:
- communicating (500) the decision (400) to be a cluster head (CH) by sending (520) a cluster head decision group message (CH-GN) via the second mobile communication network (2000).

3. The method according to claim 1 or 2, wherein the method additionally comprises:
- initialising (310) the cluster head probability (p) to a value of one, if:
- no cluster head probability (p) is yet available, or
- a cluster head probability (p) initialisation instruction is present.

4. The method according to any one of the preceding claims, wherein
the decision interval (T) is between 1 second and 60 seconds.

5. The method according to any one of the preceding claims, wherein
the decision interval (T) is randomly determinable.

6. The method according to any one of the preceding claims, wherein
the decision interval (T) is determinable depending on a movement speed of a motor vehicle or a device of the motor vehicle which carries out the method.

7. The method according to any one of the preceding claims, wherein
the cluster head probability (p) is reduced (300) for each received beacon signal (B) in the decision interval (T) by a value between 0 and 1.

8. The method according to any one of the preceding claims, wherein
the cluster head probability (p) for each received beacon signal (B) is reduced (300) in the decision interval (T) by a value that is determined by means of a weighting, preferably by means of a weighting algorithm, and wherein the weighting takes place depending on at least one corresponding parameter which is significant for a dynamic behaviour of group participants in the hybrid network.

9. The method according to any one of the preceding claims, wherein
the decision (400) to be a cluster head (CH), with the cluster head probability (p), is made depending on a threshold value (S) for the cluster head probability (p).

10. The method according to any one of the preceding claims, wherein
the decision to be a cluster head (CH) is communicated (500) by sending (510) a cluster head decision group message (CH-GN) in a beacon signal (B) .

11. The method according to any one of the preceding claims, wherein
the group message (GN) is sent (610) and/or received as a broadcast message and/or as a unicast message.

12. A device (10) for sending information between two mobile communication networks (1000, 2000), wherein the first mobile communication network (1000) is a mobile ad-hoc network (MANET), in particular a vehicular ad-hoc network (VANET), and wherein the second mobile communication network (2000) is a cellular network (CNET), the device (10) comprising:
- a mobile ad-hoc network-enabled device (MANET), in particular a vehicular ad-hoc network-enabled device (VANET),
- a cellular network-enabled device (CNET), and
- a cluster head device (CH),
wherein the cluster head device (CH) is configured to carry out a method according to any one of claims 1 to 11.

13. A motor vehicle comprising:
- a device (10) according to claim 12.

14. A computer program product, comprising commands which cause the device according to claim 12 to carry out the method steps according to one of claims 1 to 11.

15. A data carrier comprising a computer program product according to claim 14.

## Revendications

1. Dispositif permettant d'envoyer des informations entre deux réseaux de communication mobiles (1000, 2000), le premier réseau de communication mobile (1000) étant un réseau ad-hoc mobile (MANET), en particulier un réseau ad-hoc véhiculaire (VANET), le second réseau de communication mobile (2000) étant un réseau cellulaire (CNET), et les deux réseaux de communication mobiles (1000, 2000) formant ensemble un réseau hybride avec un canal de signal (SCH) un nœud adapté au réseau hybride pouvant faire office de passerelle entre l'un des réseaux et l'autre réseau en mettant en œuvre un procédé pour être une tête de cluster, ce procédé comprenant les étapes suivantes consistant à :
- déterminer (100) un intervalle de décision (T),
- surveiller (200) le canal de signal (SCH) pour recevoir un signal de balise (B),
- réduire (300) la probabilité (p) de tête de cluster pour chaque signal de balise (B) reçu dans l'intervalle de décision (T),
- décider (400) d'être une tête de cluster (CH) avec la probabilité réduite (p) de tête de cluster avec l'écoulement de l'intervalle de décision,
- si la décision (400) d'être une tête de cluster (CH) est positive,
- annoncer (500) la décision (400) d'être une tête de cluster (CH) en envoyant (510) un message de groupe de décision de tête de cluster (CH-GN) sur le premier réseau de communication mobile (1000),
- si (600) un message de groupe (GN) est reçu sur le premier réseau de communication mobile (1000) envoyer (610) ce message de groupe (GN) sur le second réseau de communication mobile (2000), et
- si (700) un message de groupe (GN) est reçu sur le second réseau de communication mobile (2000) envoyer (710) ce message de groupe (GN) sur le premier réseau de communication mobile (1000).

2. Procédé conforme à la revendication 1,
comprenant en outre des étapes consistant à :
- si la décision (400) d'être une tête de cluster (CH) est positive :
- annoncer (500) la décision (400) d'être une tête de cluster (CH) en envoyant (520) un message de groupe de décision de tête de cluster (CH-GN) sur le second réseau de communication mobile (2000).

3. Procédé conforme à la revendication 1 ou 2,
comprenant en outre des étapes consistant à :
- initialiser (310) la probabilité (p) de tête de cluster (p) sur la valeur un si :
- aucune valeur de probabilité (p) de tête de cluster n'est encore présente, ou
- une instruction d'initialisation de probabilité (p) de tête de cluster est présente.

4. Procédé conforme à l'une quelconque des revendications précédentes, selon lequel l'intervalle de décision (T) est compris entre 1 seconde et 60 secondes.

5. Procédé conforme à l'une quelconque des revendications précédentes, selon lequel l'intervalle de décision (T) peut être déterminé de façon aléatoire.

6. Procédé conforme à l'une quelconque des revendications précédentes, selon lequel l'intervalle de décision (T) peut être déterminé en fonction de la vitesse de déplacement d'un véhicule ou d'un dispositif du véhicule qui met en œuvre le procédé.

7. Procédé conforme à l'une quelconque des revendications précédentes, selon lequel la réduction (300) de la probabilité (p) de tête de cluster de chaque signal de balise (B) reçu, est effectuée dans l'intervalle de décision (T) d'une valeur qui est située entre 0 et 1.

8. Procédé conforme à l'une quelconque des revendications précédentes, selon lequel
la réduction (300) de la probabilité (p) de tête de cluster pour chaque signal de balise (B) reçu est effectuée dans l'intervalle de décision (T) d'une valeur qui est déterminée au moyen d'une pondération, de préférence au moyen d'un algorithme de pondération, et la pondération est effectuée en fonction d'au moins un paramètre correspondant qui est significatif pour le comportement dynamique de participants au groupe dans le réseau hybride.

9. Procédé conforme à l'une quelconque des revendications précédentes, selon lequel
la décision (400) d'être une tête de cluster (CH) est effectuée avec la probabilité (p) de tête de cluster en fonction d'une valeur de seuil (S) de la probabilité (p) de tête de cluster.

10. Procédé conforme à l'une quelconque des revendications précédentes, selon lequel
l'annonce (500) de la décision d'être une tête de cluster (CH) est effectuée en envoyant (510) un message de groupe de décision de tête de cluster (CH-GN) dans un signal de balise (B).

11. Procédé conforme à l'une quelconque des revendications précédentes,
selon lequel l'envoi (610) et/ou la réception du message de groupe (GN) est(sont) effectué(es) sous la forme d'un message radiodiffusé et/ou d'un message de diffusion individuelle.

12. Dispositif (10) permettant d'envoyer des informations entre deux réseaux de communication mobiles (1000, 2000), le premier réseau de communication mobile (1000) étant un réseau ad-hoc mobile (MANET), en particulier un réseau ad-hoc véhiculaire (VANET) et le second réseau de communication mobile (2000) étant un réseau cellulaire (CNET), ce dispositif (10) comprenant :
- un dispositif adapté au réseau ad-hoc mobile (MANET), en particulier un dispositif adapté au réseau ad-hoc véhiculaire (VANET),
- un dispositif adapté au réseau cellulaire (CNET) et,
- un dispositif de tête de cluster (CH),
le dispositif de tête de cluster (CH) étant réalisé pour permettre la mise en œuvre d'un procédé conforme à l'une quelconque des revendications 1 à 11.

13. Véhicule équipé d'un dispositif (10) conforme à la revendication 12.

14. Produit-programme d'ordinateur comprenant des instructions qui commandent un dispositif conforme à la revendication 12, pour mettre en œuvre les étapes d'un procédé conforme à l'une des revendications 1 à 11.

15. Support de données comprenant un produit-programme d'ordinateur conforme à la revendication 14.
